# EUROPEAN PATENT SPECIFICATION

(11) **EP 1 462 663 B1**
(45) Date of publication and mention of the grant of the patent: **10.01.2007**
(21) Application number: 04460002.1
(22) Date of filing: 20.03.2004
(51) Int. Cl.: F16B 2/24, F24D 19/04, B60K 11/00, F16B 5/06

(54) **Bracket**
Klammer
Crochet

(30) Priority: 28.03.2003 PL 35940003
(43) Date of publication of application: 29.09.2004
(73) Proprietor: Delphi Technologies, Inc., Troy, MI 48007 (US)
(72) Inventor: Obsadny, Krzysztof, 63-440 Raszkow (PL); Frankiewicz, Tomasz, 63-400 Ostrow Wielkopolski (PL)
(74) Representative: Lukaszyk, Szymon

(56) References cited:
- DE-C- 4 343 680
- US-A- 2 668 998
- US-A- 3 648 559

## Description

The present invention relates to a bracket for a flat surface with a mounting projection, having in its central part a clamp for said mounting projection. In particular the invention relates to a bracket for U-shaped, L-shaped or Ω-shape side support of a motor vehicle radiator cooling core, wherein the bracket has a form of a single-element spatial frame having in its central part a clamp for the mounting projection, extending from one side into a mounting surface and form the other side into a working surface and each of said surfaces has at least three arms separated by gaps, wherein the arms interconnected with each other are bent alternately at an acute angle and substantially perpendicular to their corresponding surfaces, whereas arms that are bent substantially perpendicular define the clamp.

Brackets of this kind are used as a mounting points or a base for fixing other elements, in particular a fan and a fan shroud, therefore the suitable rigidity, reliability of the attachment to the side support and resistance to mechanical vibrations generated during operation of these elements are necessary.

Known constructions of brackets provide the required rigidity mainly by making them of relatively stiff raw materials, such as stainless steel, or by furnishing them with additional reinforcing beads. Moreover, the existing constructions of brackets depend of the cross-section of the side support, which can be for instance U-shaped, L-shaped or Ω-shaped, thus the design of a bracket that is suitable for all side support types and may be easily assembled without the need to make an additional mounting boreholes or slots in the side support is rather difficult.

U.S. Pat. No. 3,648,559 discloses a fastener for connecting two parts together including a rectangular shaped, generally flat, elongated body, where in the middle of the body there is an open dimpled section formed as by a pair of spanner sections and a pair of retaining arms which extend down from the body and are spaced from one another to provide an opening. Arms form a clamp and are adapted to accept and exert pressure on a ball stud fixed to one of the parts being connected.

A clip of similar construction is disclosed in U.S. Pat. No. 2,668,998 which corresponds to the preamble of claim 1. The metal strip forming the clip is bent into an inverted V-shape and provided with a central transverse slit and intermediate spaced parallel slits on opposite ends thereof to provide a clamp in a form of a pair of elongated spring arms between the bridge portions joining the end flanges of the clip.

Yet another form of a bracket or retaining clip is disclosed in German patent specification DE 4343680.

The object of the present invention is to provide a bracket having a shape, structure and material, which would enable manufacturing of the product in convenient and economically efficient way, which would provide suitable rigidity as well as static and dynamic strength, and which would allow easy, fast and precise assembling, in particular as a mounting point for motor vehicle radiator cooling core side supports of various cross-sections, with no need of technologically complicated modification of the side support.

In accordance with the invention this object is accomplished in a bracket, where each arm of one surface which is bent substantially perpendicular extends into an arm of the other surface which is bent at an acute angle.

By manufacturing of the bracket as a single-unit spatial (3D) frame, a product of uniform and compact structure is obtained, which increases the strength of the bracket. Suitable shaping of the arms leads to favourable transfer of vibrations and loads that are transmitted to the bracket from appliances that are attached to it. Particularly important are diagonal arms that perform the function of cantilevers and transfer both tensile and compressing stresses. All the above features enable manufacturing of the bracket from a raw material with low specific rigidity, e.g. aluminium, with no need of forming drawing beads.

Moreover there is no need to modify the side support construction by making additional slots or boreholes for attaching the bracket. The bracket according to the present invention is a versatile structure and can be attached to a side support having practically any section, e.g. U-shaped, L-shaped or Ω-shaped side support, providing that the side support is provided with a suitable mounting projection.

In the preferred embodiment of the bracket, gaps corresponding to each other cut through the clamp and are mutually connected.

Thanks to that during the stamping process of the bracket, a relative displacement (shift) of corresponding arms occurs and no local necking of the metal sheet, of which the bracket is made, can be observed. The mutually connected arms of the bracket are of the same length.

It is also preferable if the working surface is ended with substantially perpendicular mounting plate.

In such a case it is advantageous to provide the mounting plate and the external arms of the working surface with reinforcements in form of curved walls disposed at equal angle to the surface of the mounting plate and to the external arms.

The mounting plate facilitates fixing the fan shroud or another component.

Furthermore, in a preferred embodiment of the bracket it is advantageous when at least one of arms bent substantially perpendicular has a snapping projection for a corresponding recess in the mounting projection of the side support.

A snapping projection, or projections, enables positioning and fixing the bracket in a predetermined position to avoid its displacements during mounting.

It is also advantageous to permanently fasten the mounting surface to the supporting surface, particularly advantageously by means of brazing.

The snapping projection and the optional recess in an edge of the mounting projection make it possible to preliminarily position the bracket on the brazing frame, which enables its fixing in the course of brazing.

Alternatively or additionally during assembling of the bracket it is possible to insert the back edge of the mounting surface into an appropriate slot made in the side support, then to swivel the bracket sliding it onto the mounting projection.

The invention is shown in examples of preferred embodiments on drawings, of which:
Fig. 1 shows an axonometric view of an example embodiment of the bracket according to the present invention,
Fig. 2 shows a lateral view of another embodiment of the bracket,
Fig. 3 shows a perspective view of the bracket from Fig. 1,
Fig. 4 shows another embodiment of the bracket, for attaching to the Ω-shaped side support, and
Fig. 5 shows the simplified layout of the metal sheet, before manufacturing the bracket shown in Fig. 1.

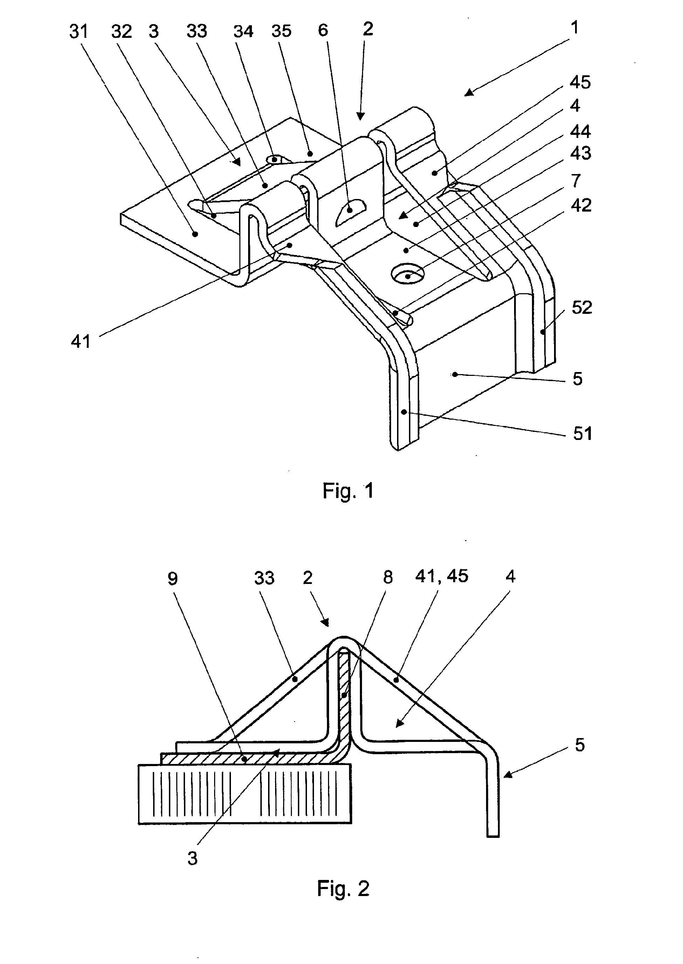

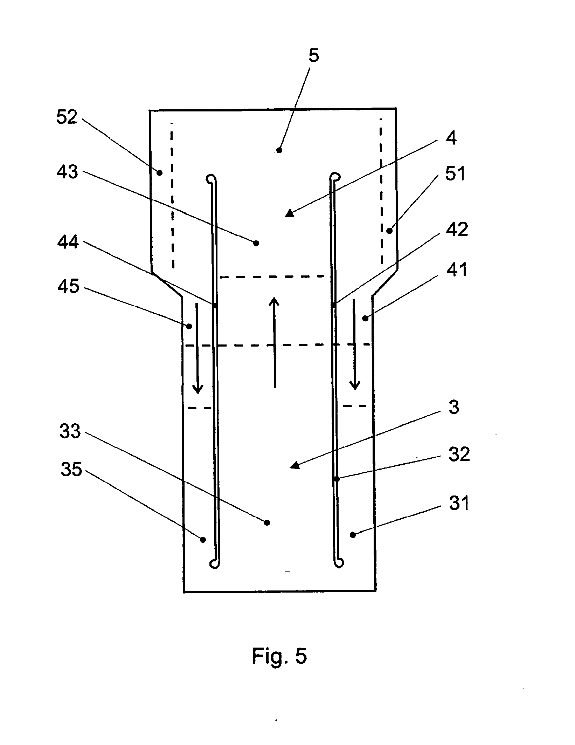

The bracket 1 shown in Fig. 1 was formed of an aluminium sheet with substantially rectangular cross-section, as illustrated in Fig. 5, by means of die stamping. The product has a shape of single-unit spatial (3D) frame structure, which comprises the following functional components: the clamp 2 in the central part of the bracket, the mounting surface 3, the working surface 4 and the mounting plate 5. It should be stressed that the above terms have only conventional meaning and are used for contextual grouping of related components.

In this embodiment of the invention, three arms 31, 33, and 35 separated by gaps 32 and 34 were shaped in the mounting surface 3, whereas three other arms 41, 43 and 45 separated by gaps 42 and 44 were formed in the working surface 4. As it can be seen in Fig. 5, said gaps are ended with circular spacings that preserve propagation of gaps when the bracket transfers loads or vibrations.

The arms 41 and 45 are bent at acute angle with respect to the surface 4 and make the structure rigid, whereas the arm 43, which is bent at right angle with respect to the working surface 4, is the basic part of the working surface 4 and the clamp 2.

Each of the arms 41, 43 and 45 extends continuously through the upper surface of the clamp 2 and further into the respective arm 31, 33 or 35, whereas the arms that are bent at acute angle (41 and 45) extend into the arms that are bent at right angle (31 and 35) with respect to the mounting surface 3. On the other hand, the arm 43 that is bent at the right angle to the working surface 43 extends into the arm 33, which is bent at acute angle. As it can be seen, the perpendicular arms 31, 35 and 43 defining the clamp 2 are also the substantial part of the mounting surface 3 and the working surface 4.

In this embodiment the gaps that separate the respective arms intersect the clamp 2 and join together. Thanks to that, during the die stamping process of the bracket, corresponding arms relatively displace (shift) with respect to each other, which is shown in Fig. 5 by means of arrows, and no local necking of the metal sheet, of which the perpendicular arms are made occurs. Additionally total lengths of the arms 31 and 41, 33 and 43 as well as of 35 and 45 are the same.

The working surface is ended with the perpendicular mounting plate 5 that serves, along with mounting borehole 7 in the working surface, as an attachment point of the fan shroud or another component of the structure. The mounting plate 5 is additionally reinforced by reinforcements 51 and 52.

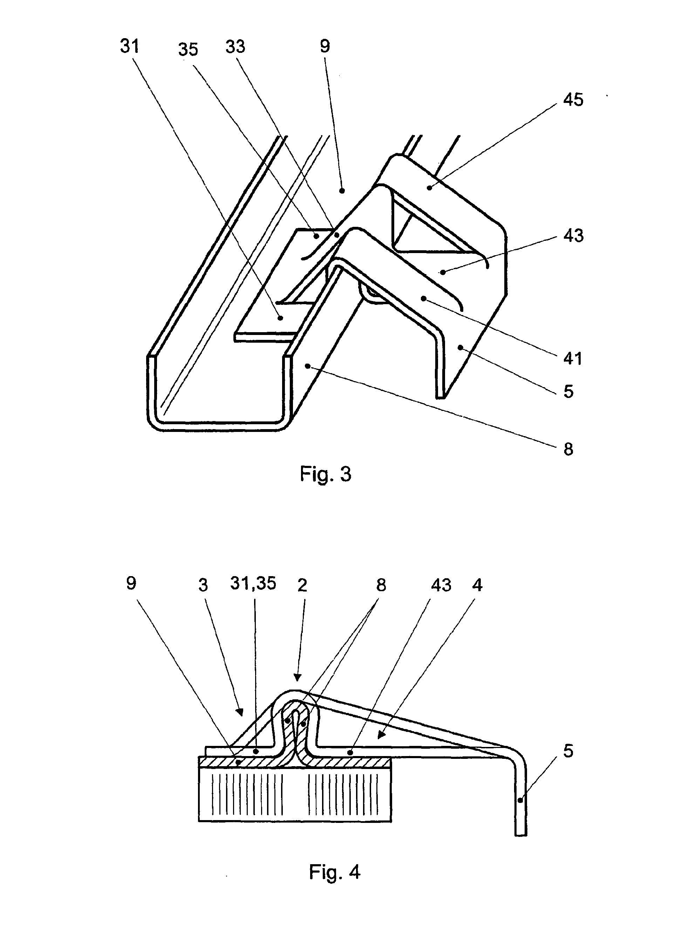

The Fig. 2 shows another embodiment of a bracket 1 with slightly different structure mounted to the L-shaped side support of radiator cooling core. The side support has a supporting surface 9 and mounting projection 8. The perpendicularly bent arms define the clamp 2 and reflect the shape of the mounting projection 8, whereas the inclined arms 41, 33 and 45 act as cantilevers that transfer both tensile and compressing stresses. The Fig. 3 shows the same bracket attached to the U-shaped side support.

The Fig. 4 shows yet another embodiment of the bracket, which enables attaching the said bracket to the Ω-shaped side support of a cooling radiator. As it is shown, the arms 31, 35 and 43 are bent at the angle a little larger than 90°, reflecting shape of the mounting projection 8.

Regardless of the construction of the bracket 1, it is attached to the side support by sliding onto the mounting projection and subsequent permanent fastening to the supporting surface, e.g. by brazing. As shown in Fig. 1 the arm 43 comprises a snapping projection 6. While assembling of the bracket on the side support the snapping projection interlocks with the edge of respective borehole in the mounting projection 8 disallowing sliding out the bracket before it is brazed to the supporting surface 9.

It is obvious that there exist many other methods of attaching the bracket 1 to the side support, e.g. by fixing the edge 3 of the mounting surface in the appropriate slot of the mounting projection 8 or the supporting surface 9, however such solutions were not presented in details. Other structures of the bracket that have more than three arms on each side of the clamp 2 are possible as well.

## Claims

1. A bracket for a flat supporting surface having a mounting projection, in particular for an U-shaped, L- shaped or Ω- shaped side support of a motor vehicle radiator core, wherein the bracket has a form of a single-element spatial frame having in its central part a clamp (2) for the mounting projection (8), extending from one side into a mounting surface (3) and from the other side into a working surface (4) and each of said surfaces has at least three arms (31, 33 and 35; 41, 43 and 45) separated by gaps (32 and 34; 42 and 44), wherein the arms interconnected with each other are bent alternately at an acute angle and substantially perpendicular to their corresponding surfaces (3, 4), whereas arms that are bent substantially perpendicular (31, 43, 35) define the clamp (2), **characterised in that**, each arm (31, 35, 43) of one surface (3, 4) which is bent substantially perpendicular extend continuously into an arm (41, 45, 33) of the other surface (4, 3) which is bent at an acute angle.

2. A bracket according to claim 1, **characterised in that**, gaps (32, 42 and 34, 44) corresponding to each other cut through the clamp (2) and are mutually connected.

3. A bracket according to claim 1 or 2, **characterised in that**, the working surface (4) is ended with substantially perpendicular mounting plate (5).

4. A bracket according to claim 3, **characterised in that**, the mounting plate (5) and the external arms (41, 45) of the working surface (4) comprise reinforcements (51, 52) in a form of curved walls disposed at equal angle to the surface of the mounting plate (5) and to the external arms (41, 45).

5. A bracket according to claim 1 or 2 or 3 or 4, **characterised in that**, at least one of arms (43) bent substantially perpendicular has a snapping projection (6) for a corresponding recess in the mounting projection (8).

6. A bracket according to claim 1 or 2 or 3 or 4 or 5, **characterised in that**, the mounting surface (3) is permanently fastened to the supporting surface (9).

7. A bracket according to claim 6, **characterised in that**, the mounting surface (3) is brazed to the supporting surface (9).

8. A bracket according to claim 1 or 2 or 3 or 4 or 5 or 6, **characterised in that**, an edge of the mounting surface (3) abuts against the corresponding gap in the side support (8, 9).

## Patentansprüche

1. Klammer für eine flache Auflagefläche mit einem Montagevorsprung, insbesondere für eine U-förmige, L-förmige oder Ω-förmige Seitenhalterung eines Kraftfahrzeug-Radiatorkerns, wobei die Klammer eine Form eines räumlichen Rahmens hat, welcher aus einem einzigen Element besteht und in seinem Mittelteil eine Klemme (2) für den Montagevorsprung (8) aufweist, und welcher sich von einer Seite her in eine Montagefläche (3) und von der anderen Seite her in eine Arbeitsfläche (4) hinein erstreckt, und wobei jede der Flächen zumindest drei durch Spalte (32 und 34; 42 und 44) getrennte Arme (31, 33 und 35; 41, 43 und 45) aufweist, wobei die untereinander verbundenen Arme abwechselnd in einem spitzen Winkel und im wesentlichen senkrecht zu ihren entsprechenden Flächen (3, 4) gebogen sind, während die Arme, die im wesentlichen senkrecht gebogen sind (31, 43, 35), die Klemme (2) bilden, **dadurch gekennzeichnet, dass** jeder Arm (31, 35, 43) einer Fläche (3, 4), welcher im wesentlichen senkrecht gebogen ist, sich durchgehend in einen Arm (41, 45, 33) der anderen Fläche (4, 3) hinein erstreckt, welcher in einem spitzen Winkel gebogen ist.

2. Klammer nach Anspruch 1, **dadurch gekennzeichnet, dass** die einander entsprechenden Spalte (32, 42 und 34, 44) die Klemme (2) durchbrechen und untereinander verbunden sind.

3. Klammer nach Anspruch 1 oder 2, **dadurch gekennzeichnet, dass** die Arbeitsfläche (4) mit der im wesentlichen senkrechten Montageplatte (5) beendet ist.

4. Klammer nach Anspruch 3, **dadurch gekennzeichnet, dass** die Montageplatte (5) und die äußeren Arme (41, 45) der Arbeitsfläche (4) Verstärkungen (51, 52) in Form von gewölbten Wänden umfassen, die im gleichen Winkel zu der Oberfläche der Montageplatte (5) und zu den äußeren Armen (41, 45) angeordnet sind.

5. Klammer nach Anspruch 1 oder 2 oder 3 oder 4, **dadurch gekennzeichnet, dass** zumindest einer der im wesentlichen senkrecht gebogenen Arme (43) einen schnappenden Vorsprung (6) für eine entsprechende Ausnehmung in dem Montagevorsprung (8) aufweist.

6. Klammer nach Anspruch 1 oder 2 oder 3 oder 4 oder 5, **dadurch gekennzeichnet, dass** die Montagefläche (3) unlösbar an der Auflagefläche (9) befestigt ist.

7. Klammer nach Anspruch 6, **dadurch gekennzeichnet, dass** die Montagefläche (3) auf die Auflagefläche (9) aufgelötet ist.

8. Klammer nach Anspruch 1 oder 2 oder 3 oder 4 oder 5 oder 6, **dadurch gekennzeichnet, dass** eine Kante der Montagefläche (3) an dem entsprechenden Spalt in der Seitenhalterung (8, 9) anstößt.

## Revendications

1. Ferrure pour une surface de support plate ayant une saillie de montage, en particulier pour un support latéral en forme de U, en forme de L ou en forme de Ω, d'un noyau de radiateur de véhicule automobile, dans laquelle la ferrure a la forme d'un cadre en trois dimensions fait d'un seul élément qui a, dans sa partie centrale, une pince (2) pour la saillie de montage (8), qui s'étend à partir d'un côté dans une surface de montage (3) et à partir de l'autre côté dans une surface de travail (4), et chacune desdites surfaces possède trois bras (31, 33 et 35 ; 41, 43 et 45) séparés par des espaces vides (32 et 34 ; 42 et 44), dans laquelle les bras reliés l'un à l'autre sont coudés alternativement à angle aigu et sensiblement perpendiculairement à leurs surfaces respectives (3, 4), alors que les bras qui sont coudés sensiblement perpendiculairement (31, 43, 35) définissent la pince (2), **caractérisée en ce que** chaque bras (31, 35, 43) d'une surface (3, 4) qui est coudé sensiblement perpendiculairement se prolonge continûment par un bras (41, 45, 33) de l'autre surface (4, 3) qui est coudé à angle aigu.

2. Ferrure selon la revendication 1, **caractérisée en ce que** les espaces vides (32, 42 et 34, 44) qui se correspondent mutuellement traversent la pince (2) et sont reliés entre eux.

3. Ferrure selon la revendication 1 ou 2, **caractérisée en ce que** la surface de travail (4) se termine par une plaque de montage (5) sensiblement perpendiculaire.

4. Ferrure selon la revendication 3, **caractérisée en ce que** la plaque de montage (5) et les bras extérieurs (41, 45) de la surface de travail (4) comprennent des renforcements (51, 52) se présentant sous la forme de parois courbes formant des angles égaux avec la surface de la plaque de montage (5) et avec les bras extérieurs (41,45).

5. Ferrure selon la revendication 1 ou 2 ou 3 ou 4, **caractérisée en ce qu'**au moins un des bras (43) qui sont coudés sensiblement perpendiculairement présente une saillie d'encliquetage (6) prévue pour correspondre avec un évidement ménagé dans la saillie de montage (8).

6. Ferrure selon la revendication 1 ou 2 ou 3 ou 4 ou 5, **caractérisée en ce que** la surface de montage (3) est fixée à la surface de support (9) par une liaison permanente.

7. Ferrure selon la revendication 6, **caractérisée en ce que** la surface de montage (3) est brasée sur la surface de support (9).

8. Ferrure selon la revendication 1 ou 2 ou 3 ou 4 ou 5 ou 6, **caractérisée en ce qu'**un bord de la surface de montage (3) bute contre l'espace vide correspondant prévu dans le support latéral (8, 9).
